Europäisches Patentamt

European Patent Office

Office européen des brevets

(19)

(11) EP 0 797 780 B1

(12) FASCICULE DE BREVET EUROPEEN

(45) Date de publication et mention
de la délivrance du brevet:
**04.07.2001 Bulletin 2001/27**

(21) Numéro de dépôt: **96933474.7**

(22) Date de dépôt: **02.10.1996**

(51) Int Cl.⁷: **G01V 1/36**, G01V 1/30

(86) Numéro de dépôt international:
**PCT/FR96/01536**

(87) Numéro de publication internationale:
**WO 97/14062 (17.04.1997 Gazette 1997/17)**

(54) **METHODE DE TRAITEMENT DE TRACES SISMIQUES REFLEXION ENREGISTREES POUR DES DEPORTS VARIABLES**

VERFAHREN ZUM VERARBEITEN, MIT VARIABLEM OFFSET AUFGEZEICHNETEN, SEISMISCHEN REFLEXIONSPUREN

METHOD FOR PROCESSING REFLECTION SEISMIC TRACES RECORDED FOR VARIABLE OFFSETS

(84) Etats contractants désignés:
**FR GB IT NL**

(30) Priorité: **06.10.1995 FR 9511816**

(43) Date de publication de la demande:
**01.10.1997 Bulletin 1997/40**

(73) Titulaire: **ELF AQUITAINE PRODUCTION**
**92400 Courbevoie (FR)**

(72) Inventeurs:
• **CANADAS, Guy**
**F-64000 Pau (FR)**
• **DUNAND, Jean-Pierre**
**F-64420 Soumoulou (FR)**

(74) Mandataire: **Levy, David et al**
**c/o S.A. FEDIT-LORIOT & AUTRES**
**CONSEILS EN PROPRIETE INDUSTRIELLE**
**38, Avenue Hoche**
**75008 Paris (FR)**

(56) Documents cités:
**EP-A- 0 548 384          US-A- 5 258 960**

• **GEOPHYSICS, vol. 50, no. 12, Décembre 1985, TULSA, OKLAHOMA,USA, pages 2727-2741, XP002008395 THORSON ET AL.: "Velocity-stack and slant-stack stochastic inversion"**
• **GEOPHYSICS, vol. 58, no. 7, 1 Juillet 1993, pages 1002-1016, XP000385217 REITER E C ET AL: "2-D VELOCITY INVERSION/IMAGING OF LARGE OFFSET SEISMIC DATA VIA THE TAU-P DOMAIN"**

**Description**

La présente invention concerne une méthode de traitement de traces sismiques réflexion enregistrées pour des déports variables. Elle se rapporte plus particulièrement à une méthode de traitement des zones de concentration d'énergie obtenues sur les transformées résultant de l'application d'une transformation de type parabolique aux collections de traces sismiques en point milieu commun (CMP).

En exploration pétrolière, une méthode usuelle pour obtenir une image sismique du sous-sol est la sismique réflexion. Dans une telle méthode, à partir de sources d'énergie appropriées, appelées émetteurs, on émet des ondes acoustiques, qui se propagent dans le sous-sol à explorer et se réfléchissent sur les différents réflecteurs qu'il renferme. Les ondes réfléchies sont enregistrées, en fonction du temps, sur des récepteurs adaptés, disposés à la surface du sol ou dans l'eau. Chaque enregistrement, fourni par un récepteur et dénommé encore trace sismique, est ensuite affecté à la projection du point qui est situé au milieu du segment reliant l'émetteur et le récepteur. Ceci correspond au tri en point milieu commun.

Dans la technique de prospection sismique bien connue, dite de couverture multiple, les émetteurs et les récepteurs sont disposés à la surface du sol de telle sorte qu'un même point milieu corresponde à plusieurs enregistrements. La série d'enregistrements, ou traces sismiques, associés au même point milieu forme ce qu'il est convenu d'appeler une collection de traces ou d'enregistrements en point milieu commun. Cette collection de traces en point milieu commun est un diagramme sur lequel les traces sismiques correspondant à un même point milieu, qui sont enregistrées en fonction du temps t pour des déports x variables des récepteurs audit point milieu, sont représentées parallèlement à un axe des temps t à partir de points d'abscisses respectives x pris sur un axe des abscisses perpendiculaire, à l'origine des temps, à l'axe des temps. L'ensemble des collections de traces en point milieu commun est associé à une suite de points milieux différents situés, de préférence, le long d'une même ligne à la surface. Le traitement sismique permet, à partir de ces collections de traces d'obtenir une image sismique dans le plan vertical passant par l'ensemble de ces points milieux. Le temps d'arrivée d'une onde enregistrée varie avec l'angle d'incidence θ, qui est l'angle entre la normale au réflecteur au point de réflexion, appelé point miroir, et la direction de l'onde incidente (descendante). Pour une même collection et un même point miroir, cet angle varie pour chaque enregistrement en fonction du déport x du récepteur par rapport au point milieu. Si l'on fait l'hypothèse classique d'un sous-sol homogène et isotrope, en couches planes et parallèles, les réflexions associées à chacun des réflecteurs du sous-sol, observées sur une collection de traces sismiques en point milieu commun, s'alignent théoriquement le long d'hyperboles centrées à la verticale du point milieu et appelées indicatrices. A ces collections de traces en point milieu commun, on applique généralement une correction dépendant du temps, dite correction d'obliquité ou correction dynamique (correction NMO), qui a pour but de redresser les indicatrices hyperboliques pour les amener théoriquement à l'horizontale. Classiquement, la correction dynamique effectuée est une correction s'appuyant sur l'équation suivante :

$$t^2 = to^2 + \frac{x^2}{V^2} \qquad (1)$$

dans laquelle :

- x est le déport défini précédemment
- to est le temps de propagation avec réflexion pour un déport x nul entre émetteur et récepteur,
- V, qui est fonction du temps, est une vitesse moyenne de propagation des ondes dans le sous-sol, et
- t est le temps de propagation après réflexion associé à un couple émetteur/récepteur pour un déport x.

L'application d'une transformation parabolique et notamment de la transformation généralisée de RADON à des collections de traces sismiques en point milieu commun corrigées de dynamique (NMO), désignées ci-après par collection d(t,x) où t et x ont les significations données plus haut en relation avec les corrections NMO, conduit à une décomposition des collections d(t,x) le long de paraboles d'équation $t = \tau + qx^2$, où $\tau$ est le temps de propagation des ondes pour un déport x nul et $x^2$ est le carré du déport.

La transformée parabolique de RADON de la collection d(t,x) est un diagramme représentatif de la fonction $\mu(\tau, q)$ définie par l'équation :

$$d(t,x) = \sum_{\tau} \sum_{q} u(\tau, q) \cdot \delta\{t - (\tau + qx^2)\} \qquad (2)$$

où t, x, τ, q sont comme indiqué plus haut et $\delta[t-(\tau+qx^2)]$ est égale à 1 si $t=\tau+qx^2$ et égale à zéro partout ailleurs. Un événement représenté sur la collection d(t,x) avec une amplitude variant lentement le long de la parabole d'équation $t=\tau_1+q_1x^2$ est représenté sur le diagramme $\mu(\tau,q)$ par une zone de concentration d'énergie centrée au point de coordonnées $(\tau_1,q_1)$ et aucune énergie n'est aliasée loin de ce point. Lorsque la transformation parabolique est correctement effectuée, les résidus contiennent seulement des bruits incohérents et l'information sismique est codée sans aliasage sur le diagramme représentant la transformée parabolique $\mu(\tau,q)$.

La transformation parabolique du type RADON appliquée aux collections d(t,x) est essentiellement utilisée à ce jour pour éliminer les multiples de longue période. Le processus mis en oeuvre consiste tout d'abord à transformer les collections d(t,x) en des diagrammes $\mu(\tau,q)$ correspondants, puis à définir une séparation entre les événements sismiques réels des multiples et ensuite à reconstruire directement les événements réels apparaissant sur les diagrammes $\mu(\tau,q)$ en utilisant la transformée parabolique inverse ou bien à soustraire des collections d(t,x) les multiples reconstruits à partir des diagrammes $\mu(\tau,q)$ via la transformée parabolique inverse.

On a maintenant trouvé que l'on pouvait utiliser les diagrammes $\mu(\tau,q)$, obtenus par application d'une transformation du type transformation parabolique de RADON aux collections d(t,x), pour produire des données permettant d'améliorer la connaissance des vitesses de correction NMO et ainsi de parfaire l'horizontalisation des indicatrices apparaissant sur les collections d(t,x) et également de réaliser une analyse des amplitudes en fonction des déports (AVO analysis en anglais) conduisant à la détermination des grandeurs intercept (Ro) et gradient (G) apparaissant notamment dans l'équation de SHUEY $R(\theta)=Ro+Gsin^2\theta$, exprimant la réflectivité $R(\theta)$ des ondes P en fonction de l'angle d'incidence $\theta$ desdites ondes.

L'invention a donc pour objet une méthode de traitement des diagrammes $\mu(\tau,q)$ produits par application d'une transformation curvilinéaire du type transformation parabolique de RADON aux collections d(t,x), pour former de nouveaux diagrammes dans un domaine $(\tau,\xi)$ où $\xi$ représente le carré du déport, lesdits diagrammes, désignés par $D(\tau,\xi)$, conduisant à la détermination des paramètres évoqués ci-dessus.

La méthode selon l'invention est plus concrètement une méthode de traitement de traces sismiques réflexion enregistrées en fonction du temps (t) pour des déports (x) variables entre un déport minimum et un déport maximum, dans laquelle :

- on constitue, dans un premier domaine (t,x), des collections d(t,x) de traces sismiques en point milieu commun corrigées d'obliquité (correction NMO) à partir des traces sismiques enregistrées et d'une loi de vitesse de correction ($V_{NMO}$) fonction du temps,
- on applique aux collections d(t,x) dudit premier domaine une transformation faisant correspondre à chaque collection d(t,x) un diagramme $\mu(\tau,q)$ dans un deuxième domaine $\mu(\tau,q)$, de sorte qu'un événement sismique distribué le long d'une trajectoire curviligne sur la collection d(t,x) soit focalisé en une zone de concentration d'énergie sur le diagramme $\mu(\tau,q)$ du deuxième domaine, la variable $(\tau)$ désignant le temps de propagation des ondes sismiques avec réflexion pour un déport nul (x=0) et la variable q étant un paramètre lié à la courbure de ladite trajectoire curviligne, caractérisée en ce que, sur chaque diagramme $\mu(\tau,q)$,

a) on pointe les coordonnées $(\tau_k,q_k)$ d'un centre apparent de chaque zone de concentration d'énergie,
b) on détermine pour chaque zone de concentration d'énergie une fenêtre inférieur au domaine $(\tau,q)$ traité et comprenant toute ladite zone de concentration d'énergie,
c) on balaie chaque zone de concentration d'énergie et dans la fenêtre correspondante centrée au point de coordonnées $(\tau_k,q_k)$, par une droite, qui pivote successivement autour de chacun des points de coordonnées $(\tau,q_k)$ situés à l'intérieur de ladite fenêtre et dont la pente est égale au carré du déport et varie entre deux limites encadrées par les carrés des déports minimum et maximum,
d) on somme le long de ladite droite les amplitudes des signaux inclus dans ladite fenêtre et intersectés par ladite droite, et en ce que
e) on représente sous la forme d'un diagramme $D(\tau,x^2)$ dans un troisième domaine $(\tau,x^2)$, les valeurs desdites sommes pour chaque zone de concentration d'énergie considérée.

L'ensemble des opérations b) à e) constitue une reconstruction, dans le domaine $(\tau,x^2)$, des événements sismiques précédemment focalisés dans le domaine $(\tau,q)$. Dans ce qui suit, le terme "reconstruction" désignera l'ensemble des opérations b) à e).

Un événement parabolique sur la collection d(t,x) est reconstruit sur le diagramme $D(\tau,x^2)$ sous la forme d'un événement linéaire. Si l'événement reconstruit est horizontal, ceci signifie que le pointé utilisé pour la reconstruction était correct. Si l'événement reconstruit est penté, la mesure de sa pente $\Delta q$ dans la direction des $x^2$, qui peut être réalisée en faisant appel à toute technique appropriée et, par exemple, à une technique de semblance ou de cohérence, fournit la correction à apporter à la valeur de q du pointé. La nouvelle valeur pour ce pointé sera donc $q+\Delta q$.

La transformation la plus courante faisant passer d'une collection d(t,x) du domaine (t,x) au diagramme $\mu(\tau,$

q) correspondant du domaine $(\tau,q)$ est une transformation parabolique de RADON. Une telle transformation est définie à partir de l'équation (2) donnée précédemment, la trajectoire curviligne étant une parabole d'équation $t=\tau+qx^2$.

La transformation faisant passer d'une collection $d(t,x)$ du domaine $(t,x)$ au diagramme $\mu(\tau,q)$ correspondant du domaine $(\tau,q)$ pourrait être également une transformation de RADON de type hyperbolique faisant appel à une famille hyperboles invariantes par translation en temps. Une telle famille d'hyperboles peut être obtenue, par exemple, comme décrit dans l'article de Eric de BAZELAIRE intitulé "Normal moveout revisited : Inhomogeneous media and curved interfaces" et publié dans la revue GEOPHYSICS, Volume 53, n° 2, février 1988, pages 143 à 157 ou dans l'article de J.R. Thorson et J.F. Claerbout intitilé "Velocity-stack and slant-stack stochastic inversion" publié dans la revue GEOPHYSICS, Volume 50, n°12, décembre 1985, pages 2727-2741 ou encore comme indiqué dans la demande de brevet français déposée par la demanderesse le 19 octobre 1994 sous le n° 94 12 484 et intitulée "Méthode d'analyse et de traitement de données sismiques réflexion pour la détermination d'un champ fin de vitesse de correction d'hyperbolicité".

Lorsque les événements correspondant aux diverses valeurs $\tau_i$ du paramètre $\tau$ sont horizontalisés dans la direction des $x_2$ sur le diagramme $D(\tau,x^2)$, ledit diagramme est alors approprié pour être soumis à une analyse AVO conduisant à la détermination des grandeurs intercept (Ro) et gradient (G).

Pour ce faire, pour chaque $\tau_i$ du diagramme $D(\tau,x^2)$, on réalise une analyse de l'amplitude du signal correspondant dudit diagramme pour les différentes valeurs de $x^2$, dans une fenêtre temporelle d'ouverture $|\tau-\tau_i| <\Delta t$, où $\Delta t$ représente une valeur prédéterminée, et on effectue une régression linéaire des amplitudes en fonction de $x^2$, ce qui permet de déduire les valeurs de Ro et G, lesquelles valeurs ainsi que des combinaisons de ces dernières sont ensuite représentées en fonction de $\tau$ pour fournir les sections intercept $Ro(\tau)$, gradient $G(\tau)$ ou autres, par exemple $\frac{G}{Ro}(\tau)$ bien connues en analyse AVO.

D'autres caractéristiques et avantages apparaîtront à la lecture d'un mode de réalisation de la méthode selon l'invention illustré par les dessins annexés, sur lesquels :

- la figure 1 est une représentation très schématique d'un ensemble d'émetteurs et de récepteurs pour l'émission et la réception/enregistrement d'ondes sismiques se propageant dans une première couche du sous-sol à explorer ;
- la figure 2 est une représentation schématique d'une collection $d(t,x)$ de traces sismiques en point milieu commun corrigées d'obliquité (NMO), en fonction du déport des récepteurs ;
- la figure 3 est une représentation d'un diagramme $\mu(\tau,q)$ transformé de la collection $d(t,x)$ par application d'une transformation parabolique de RADON à ladite collection ;
- la figure 4 est une représentation du diagramme $\mu(\tau,q)$ de la figure 3 comportant un pointé des centres apparents des zones de concentration d'énergie ;
- la figure 5 est une représentation de la transformée $D(\tau,x^2)$ du diagramme $\mu(\tau,q)$ de la figure 4 ; et
- la figure 6 est une représentation du diagramme $D(\tau,x^2)$ de la figure 5 après horizontalisation pour une analyse AVO avec représentation simultanée des sections $Ro(\tau)$ et $\frac{G}{Ro}(\tau)$.

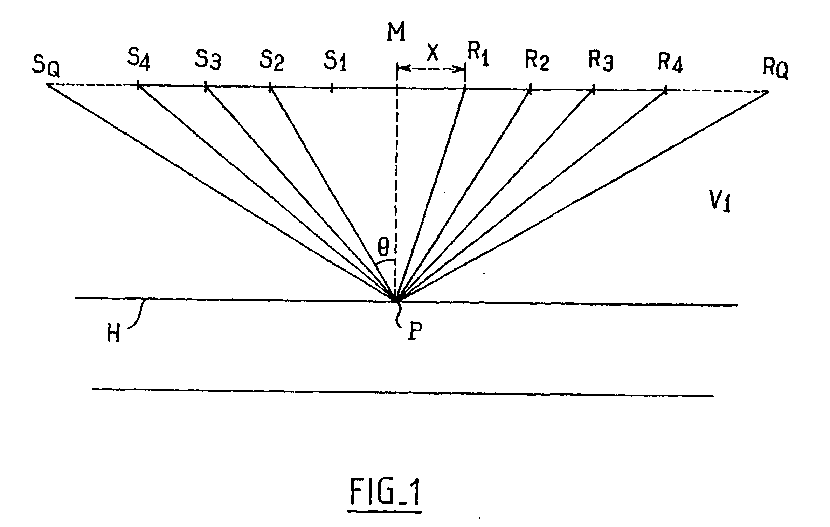

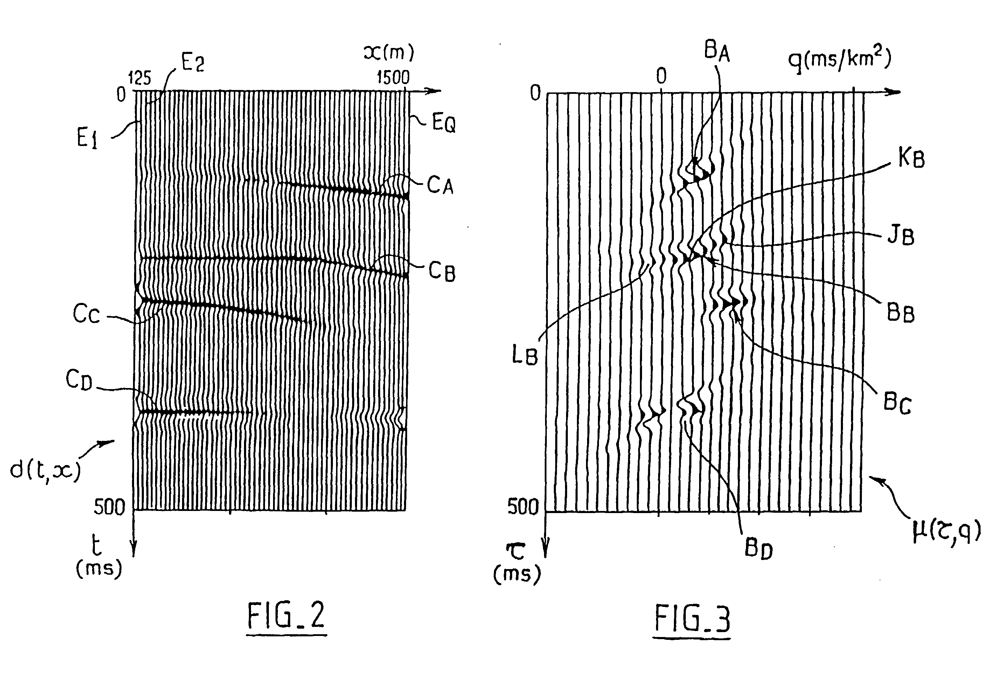

Dans le dispositif schématisé sur la figure 1, au couple émetteur $S_1$/récepteur $R_1$, est associée la trace sismique $E_1$ corrigée de dynamique (NMO) de la figure 2 de déport (offset) minimum. Au couple émetteur $S_2$/récepteur $R_2$ est associée la trace sismique $E_2$ corrigée de NMO de déport supérieur et ainsi de suite jusqu'au couple émetteur $S_Q$/récepteur $R_Q$ associé à la trace sismique $E_Q$ corrigée de NMO liée au déport maximum. Les réflexions associées à chaque limite de couches telles que H, du modèle géologique sont matérialisées sur chacun des enregistrements synthétiques de la figure 2 par une juxtaposition de réponses s'organisant le long d'indicatrices, corrigées de NMO sur ladite figure 2 et dont seules quatre $C_A$ à $C_D$ sont représentées sur cette figure.

L'étape de correction d'obliquité (NMO) appliquée à une collection de traces sismiques en point milieu commun pour produire une collection correspondante de traces sismiques en point milieu commun corrigées de NMO (collection $d(t,x)$) est bien connue des géophysiciens et elle ne sera donc pas décrite dans le détail.

La collection de traces sismiques représentée sur la figure 2 constitue la collection $d(t,x)$ de traces sismiques en point milieu commun corrigées imparfaitement de NMO à laquelle on applique la transformation parabolique de RADON définie par l'équation (2) donnée précédemment. Par cette transformation, la collection $d(t,x)$ de la figure 2, qui est une représentation dans le domaine $(t,x)$, est transformée en le diagramme $\mu(\tau,q)$ dans le domaine $(\tau,q)$. Dans ladite transformation parabolique, les branches des indicatrices $C_A$, $C_B$, $C_C$ et $C_D$ apparaissant sur la collection $d(t,x)$ de la figure 2, sont focalisées sur le diagramme $\mu(\tau,q)$ représenté sur la figure 3 en les zones de concentration d'énergie $B_A$, $B_B$, $B_C$ et $B_D$ respectivement. Théoriquement, un événement sismique figurant sur la collection $d(t,x)$ avec une amplitude variant lentement le long de la parabole d'équation $t=\tau_1+q_1x^2$, est focalisé sur le diagramme $\mu(\tau,q)$ en une zone de concentration d'énergie sensiblement ponctuelle centrée au point de coordonnée $(\tau_1, q_1)$ et aucune énergie n'est aliasée loin de ce point. En pratique, chaque zone de concentration d'énergie telle que $B_A$, $B_B$, $B_C$ ou $B_D$ est formée d'un centre, par exemple $K_B$ pour la zone $B_B$, et de deux branches plus ou moins développées, l'une horizontale dans la direction des q, par exemple branche $L_B$ pour la zone $B_B$, et l'autre pentée, par exemple branche $J_B$ pour la zone $B_B$. Le centre d'une zone de concentration d'énergie reçoit une contribution de tous les déports, tandis que la branche horizontale concerne principalement les faibles déports et la branche pentée principalement les déports lointains. La configuration d'une zone de concentration d'énergie du diagramme $\mu(\tau,q)$ dépend seulement des amplitudes le long de l'événement parabolique.

Après intégration par rapport à $\tau$, l'équation (2) définissant la transformation parabolique, utilisée pour transformer $d(t,x)$ en $\mu(\tau,q)$, peut être écrite :

$$d(t,x) = \sum_{q} \mu(t - q \cdot x^2, q) \tag{3}$$

Les événements paraboliques de la collection $d(t,x)$ peuvent donc être reconstruits pour tout déport x en effectuant une sommation de $\mu(\tau,q)$ le long de lignes droites d'équation $\tau = t-\xi q$ où $\xi$ représente le carré $x^2$ du déport.

Soit une valeur approchée des coordonnées du centre d'une zone de concentration d'énergie sur le diagramme $\mu(\tau,q)$, par exemple de coordonnées $(\tau_2,q_2)$ pour le centre de la zone $B_A$. Une telle valeur peut être déterminée, par exemple, par pointé des coordonnées du maximum 2D local de l'enveloppe de ladite zone de concentration d'énergie. L'amplitude $D(\tau,\xi=x^2)$ de l'événement le long des paraboles $t(x)=\tau+q_2 x^2$ pour des valeurs de $\tau$ situées dans la fenêtre temporelle $\tau_2-\Delta t \leq \tau \leq \tau_2 +\Delta t$, où $\Delta t$ est une valeur prédéterminée correspondant notamment à la durée du signal, peut être calculée à partir des amplitudes du diagramme $\mu(\tau,q)$ au moyen de la relation suivante :

$$D(\tau, \xi=x^2) = \sum_{q} \mu(\tau - x^2(q - q_2), q) \tag{4}$$

les valeurs de $x^2$ étant régulièrement échantillonnées dans l'intervalle $x^2_{min} < x^2 < x^2_{max}$, où $x^2_{min}$ et $x^2_{max}$ sont des valeurs respectivement minimale et maximale prédéterminées encadrées par les carrés des déports minimum et maximum.

Pour effectuer la sommation définie par la relation (4), l'intervalle de variation de q doit couvrir complètement la zone de concentration d'énergie du diagramme $\mu(\tau,q)$ sur laquelle on réalise la sommation. Cet intervalle de variation de q ne doit pas être cependant trop large pour éviter toute interférence avec les zones voisines de concentration d'énergie. Concrètement, on définit une fenêtre d'analyse dans la direction q ayant une largeur $|q-qk| <A(\tau)$, où A(T) est une valeur prédéterminée et dépendant de $\tau$, et l'on applique une sommation avec une rampe pour adoucir les effets de bords (smoothing taper).

Selon l'invention, à partir du diagramme $\mu(\tau,q)$, on construit un diagramme $D(\tau,\xi=x^2)$ d'événements linéaires dans le domaine $(\tau,x^2)$, sur lequel chaque évènement linéaire correspond à une zone de concentration d'énergie du diagramme $\mu(\tau,q)$.

Pour construire l'évènement linéaire du diagramme $D(\tau,x^2)$, correspondant à une zone de concentration d'énergie du diagramme $\mu(\tau,q)$, on procède comme suit :

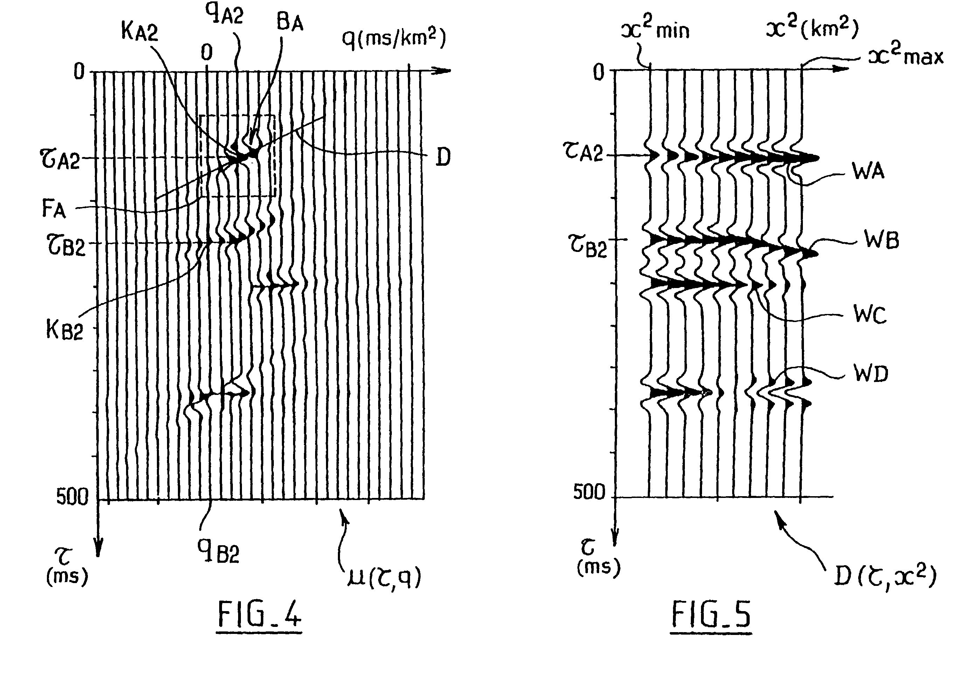

Tout d'abord, on pointe le centre apparent $K(\tau_k,q_k)$ de la zone de concentration d'énergie à traiter, par exemple le centre apparent $K_{A2}$ de la zone de concentration d'énergie $B_A$ du diagramme $\mu(\tau,q)$ représenté sur la figure 4. Ceci peut être réalisé, par exemple comme indiqué précédemment, en pointant les coordonnées du maximum 2D local de l'enveloppe de ladite zone de concentration d'énergie, par exemple les coordonnées $(\tau_{A2}, q_{A2})$ dudit maximum correspondant à la zone $B_A$.

On définit, d'autre part, une fenêtre centrée sur le centre apparent pointé de la zone de concentration d'énergie à traiter et présentant une ouverture égale à $2 \Delta t$ dans la direction $\tau$ et une ouverture égale à $2 A(\tau)$ dans la direction des q, $\Delta t$ et $A(\tau)$ étant des valeurs prédéterminées ayant les définitions données précédemment et étant telles que ladite fenêtre couvre complètement la zone de concentration d'énergie à traiter. Dans le cas du traitement de la zone de concentration d'énergie $B_A$ représentée sur le diagramme $\mu(\tau,q)$ de la figure 4, la fenêtre $F_A$ choisie couvre des valeurs de $\tau$ telles que $\tau_{A2}-\Delta t \leq \tau \leq \tau_{A2}+\Delta t$ et des valeurs de q telles que $q_{A2}-A(\tau) \leq q \leq qA2 + A(\tau)$, $\tau_{A2}$ et $q_{A2}$ étant les coordonnées du centre apparent $K_{A2}$ de la zone de concentration d'énergie $B_A$ sur lequel est centré la fenêtre $F_A$.

Pour effectuer, relativement à un pointé $(\tau_i, q_i)$, la sommation définie par l'équation (4), qui permet de reconstituer dans le domaine $(\tau,\xi=x^2)$ l'événement linéaire correspondant à la zone de concentration d'énergie correspondante du diagramme $\mu(\tau,q)$ du domaine $(\tau,q)$, on balaie ladite zone de concentration d'énergie dans la fenêtre correspondante, centrée sur le point $(\tau_i,q_i)$ et couvrant toute cette zone, par une droite qui pivote successivement autour de chacun des

points de coordonnées ($\tau_i$,$q_i$) avec $\tau_i$-$\Delta t \leq \tau \leq \tau_i$+$\Delta t$. Plus précisément, pour chaque valeur de $\tau$ dans la fenêtre et pour chaque valeur de $\xi = x^2$, la sommation des échantillons de la zone de concentration d'énergie le long de la droite de pente $\xi = x^2$ et passant par le point ($\tau_i$,$q_i$) fournit la valeur de D($\tau$,$\xi = x^2$). Par exemple, comme schématisé sur la figure 4, la sommation est réalisée dans la fenêtre $F_A$, centrée sur le centre apparent $K_{A2}$ de coordonnées ($\tau_{A2}$, $q_{A2}$) de la zone de concentration d'énergie $B_A$ et couvrant toute cette zone, par une droite D qui pivote successivement autour de chacun des points de coordonnées ($\tau$, $q_{A2}$) avec $\tau_{A2}$-$\Delta t \leq \tau \leq \tau_{A2}$+$\Delta t$, lesdits points incluant le point ($\tau_{A2}$,$q_{A2}$).

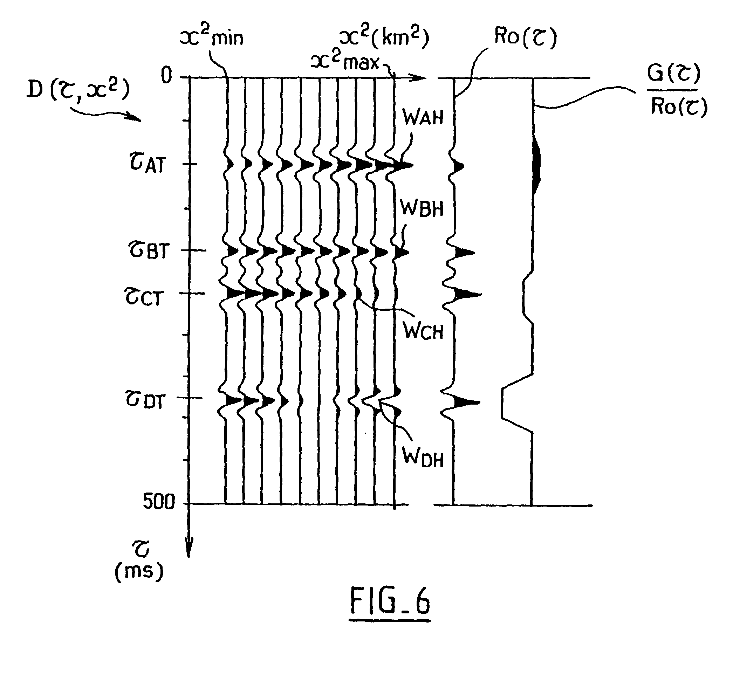

Les amplitudes des sommes calculées pour les différentes valeurs de la pente $x^2$ de la droite balayant une zone de concentration d'énergie du diagramme $\mu(\tau,q)$ ayant un centre apparent de coordonnées ($\tau_i$,$q_i$), sont représentées sur un diagramme D($\tau$,$x^2$) du domaine ($\tau$,$x^2$) à l'ordonnée $\tau = \tau_i$ pour les différentes valeurs de $x^2$ allant de $x^2_{min}$ à $x^2_{max}$. Ainsi, sur la figure 5 évènement $W_A$, représenté à l'ordonnée $\tau = \tau_{A2}$ pour les diverses valeurs de $x^2$, correspond à évènement sismique $C_A$ de la collection d(t,x) de la figure 2 focalisé, par la transformation parabolique de RADON, en la zone de concentration d'énergie $B_A$ du diagramme $\mu(\tau,q)$ de la figure 3 ou de la figure 4.

Les autres événements $W_B$, $W_C$ et $W_D$ représentés également sur le diagramme D($\tau$,$x^2$) de la figure 5, sont obtenus comme indiqué pour événement $W_A$, respectivement à partir des zones de concentration d'énergie $B_B$, $B_C$ et $B_D$ du diagramme $\mu(\tau,q)$ représenté sur l'une ou l'autre des figures 3 et 4, lesdites zones étant respectivement les transformées paraboliques de RADON des événements sismiques $C_B$, $C_C$ et $C_D$ de la collection d(t,x) de la figure 2.

Un événement horizontal dans la direction des $x^2$ sur le diagramme D(t, $x^2$), par exemple événement $W_A$ à l'ordonnée $\tau = \tau_{A2}$ sur le diagramme de la figure 5, indique que le centre pointé apparent de la zone de concentration d'énergie correspondante, par exemple centre $K_{A2}$ de coordonnées ($\tau_{A2}$, $q_{A2}$) pour la zone de concentration d'énergie $B_A$ figurant sur le diagramme $\mu(\tau,q)$ de la figure 4, coïncide avec le centre théorique de ladite zone de concentration d'énergie. Les coordonnées dudit centre, par exemple coordonnées ($\tau_{A2}$, $q_{A2}$) du centre $K_{A2}$, permettent de calculer la valeur V de la vitesse NMO de l'événement sismique hyperbolique initial, par exemple l'événement sismique $C_A$, apparaissant sur la collection d(t,x) de la figure 2, par la relation

$$\frac{1}{V^2} = \frac{1}{V^2_{NMO}} + 2\tau kqk \qquad (5)$$

où $\tau_k$ et $q_k$ sont les coordonnées du pointé et $V_{NMO}$ est la vitesse ayant servi à effectuer les corrections dynamiques (NMO) initiales.

Un événement penté sur le diagramme D($\tau$,$x^2$), par exemple événement $W_B$ sur le diagramme D($\tau$,$x^2$) représenté sur la figure 5, indique que le centre pointé apparent de coordonnées ($\tau_k$,$q_k$) de la zone de concentration d'énergie correspondante du diagramme $\mu(\tau,q)$, par exemple centre $K_{B2}$ de coordonnées ($\tau_{B2}$,$q_{B2}$) de la zone de concentration d'énergie BB du diagramme $\mu(\tau,q)$ de la figure 4, ne coïncide pas avec le centre théorique de coordonnées ($\tau_T$,$q_T$) de ladite zone. La pente dudit événement, dans la direction des $x^2$, est $\Delta q = q_k$-$q_T$. Elle peut être déterminée, par exemple, par des techniques de semblance ou de cohérence pondérées conventionnelles et à partir de la valeur de ladite pente et de la valeur de qk, on peut calculer la valeur des coordonnées ($\tau_T$,$q_T$), ce qui permet d'accéder, par application de la formule (5), à la valeur V de la vitesse NMO de l'événement sismique hyperbolique initial apparaissant sur la collection d(t,x). Ce processus de calcul est approprié pour de faibles valeurs de la pente $\Delta q$.

Lorsque la pente $\Delta q$=($q_k$-$q_T$) est importante, on réitère le traitement de la zone de concentration d'énergie avec la nouvelle valeur q'k=$q_k$+$\Delta q$, jusqu'à obtenir un événement horizontal sur le diagramme D($\tau$,$x^2$), à partir duquel on peut remonter aux coordonnées théoriques du centre de la zone de concentration d'énergie correspondant audit événement et, par application de la formule (5), à la valeur V de la vitesse NMO de l'événement sismique hyperbolique initial associé apparaissant sur la collection d(t,x).

Le cas échéant et lorsque le rapport signal/bruit associé à un événement du diagramme D($\tau$,$x^2$) le permet, un traitement de correction statique résiduelle peut être appliqué audit événement pour parfaire son horizontalisation.

Le diagramme D($\tau$,$x^2$) pour lequel les événements sont horizontalisés, par exemple le diagramme D($\tau$,$x^2$) représenté sur la partie gauche de la figure 6 montrant les événements horizontalisés $W_{AH}$, $W_{BH}$, $W_{CH}$ et $W_{DH}$ correspondant respectivement aux événements $W_A$, $W_B$, $W_C$ et $W_D$ du diagramme D($\tau$,$x^2$) représenté sur la figure 5, est approprié pour une analyse AVO permettant de déterminer les coefficients Ro (intercept) et G (gradient). Pour ce faire, pour chaque $\tau_i$ du diagramme D($\tau$,$x^2$), on analyse l'amplitude du signal correspondant dudit diagramme pour les différents $x^2$, en effectuant cette analyse dans une fenêtre temporelle |$\tau$-$\tau_i$| <$\Delta t$, avec $\Delta t$ désignant une valeur prédéterminée comme indiqué précédemment, et on effectue une régression linéaire des amplitudes en fonction de $x^2$, en faisant appel aux processus conventionnels de régression linéaire minimisant la somme des valeurs absolues des écarts entre les amplitudes déterminées et représentées en fonction de $x^2$ et les amplitudes fournies par la droite de régression linéaire ou bien minimisant la somme des carrés desdits écarts. De l'équation de la droite de régression linéaire, on déduit des valeurs de Ro et G. Ces grandeurs ou des combinaisons de ces dernières peuvent être représentées en fonction de $\tau$ pour fournir des diagrammes tels que diagramme Ro($\tau$) ou section intercept, diagramme G

($\tau$) ou section gradient, diagramme $\frac{G}{Ro}$ ($\tau$) ou autres. Sur la partie droite de la figure 6 sont représentées la section Ro ($\tau$) et la section $\frac{G}{Ro}$ ($\tau$) correspondant au diagramme $D(\tau,x^2)$ d'événements horizontalisés figurant sur la partie gauche de ladite figure.

## Revendications

**1.** Méthode de traitement de traces sismiques réflexion enregistrées en fonction du temps t pour des déports x variables entre un déport minimum et un déport maximum, dans laquelle :

- on constitue, dans un premier domaine (t,x), des collections d(t,x) de traces sismiques en point milieu commun corrigées d'obliquité à partir des traces sismiques enregistrées et d'une loi de vitesse de correction en fonction du temps,
- on applique aux collections d(t,x) dudit premier domaine une transformation faisant correspondre à chaque collection d(t,x) un diagramme $\mu(\tau,q)$ dans un deuxième domaine ($\tau$,q), de sorte qu'un événement sismique distribué le long d'une trajectoire curviligne sur la collection d(t,x) soit focalisé en une zone de concentration d'énergie sur le diagramme $\mu(\tau,q)$ du deuxième domaine, la variable $\tau$ désignant le temps de propagation des ondes sismiques avec réflexion pour un déport nul et la variable q étant un paramètre lié à la courbure de ladite trajectoire curviligne, caractérisée en ce que, sur chaque diagramme $\mu(\tau,q)$,

   a) on pointe les coordonnées $\tau_k,q_k$ d'un centre apparent de chaque zone de concentration d'énergie,
   b) on détermine pour chaque zone de concentration d'énergie une fenêtre inférieure au domaine ($\tau$,q) traité et comprenant toute ladite zone de concentration d'énergie,
   c) on balaie chaque zone de concentration d'énergie et dans la fenêtre correspondante centrée au point de coordonnées $\tau_k,q_k$, par une droite, qui pivote successivement autour de chacun des points de coordonnées $\tau,q_k$ situés à l'intérieur de ladite fenêtre et dont la pente est égale au carré du déport et varie entre deux limites encadrées par les carrés des déports minimum et maximum,
   d) on somme le long de ladite droite les amplitudes des signaux inclus dans ladite fenêtre et intersectés par ladite droite, et en ce que
   e) on représente sous la forme d'un diagramme $D(\tau,x^2)$ dans un troisième domaine ($\tau,x^2$), les valeurs desdites sommes pour chaque zone de concentration d'énergie.

**2.** Méthode selon la revendication 1, caractérisée en ce que la transformation faisant passer d'une collection d(t,x) du domaine (t,x) au diagramme $\mu(\tau,q)$ correspondant du domaine ($\tau$,q) est une transformation parabolique de RADON.

**3.** Méthode selon la revendication 1, caractérisée en ce que la transformation faisant passer d'une collection d(t,x) du domaine (t,x) au diagramme $\mu(\tau,q)$ correspondant du domaine ($\tau$,q) est une transformation de RADON de type hyperbolique faisant appel à une famille d'hyperboles invariantes par translation en temps.

**4.** Méthode selon l'une des revendications 1 à 3, caractérisée en ce que la zone de concentration d'énergie sur le diagramme $\mu(\tau,q)$ correspond à une somme d'amplitudes constituant un événement penté dans la direction des $x^2$ sur le diagramme $D(\tau,x^2)$ transformé du diagramme $\mu(\tau,q)$ et en ce qu'on détermine la pente de la direction dudit événement, qui est représentative de la différence entre les valeurs du paramètre q associées au centre apparent pointé et au centre théorique de ladite zone de concentration d'énergie.

**5.** Méthode selon l'une des revendications 1 à 4, caractérisée en ce que les événements représentés sur le diagramme $D(\tau,x^2)$ sont horizontalisés et en ce que pour chaque $\tau_i$ du diagramme $D(\tau,x^2)$ on réalise une analyse de l'amplitude du signal correspondant dudit diagramme pour les différentes valeurs de $x^2$, dans une fenêtre temporelle d'ouverture $|\tau-\tau_i|<\Delta t$, où $\Delta t$ représente une valeur prédéterminée, et on effectue une régression linéaire des amplitudes en fonction de $x^2$, à partir de laquelle on déduit les grandeurs intercept Ro et gradient G, produites en analyse des variations d'amplitude avec le déport et utilisables pour constituer des sections représentant, en fonction de $\tau$, la grandeur Ro, la grandeur G ou des combinaisons de ces grandeurs, notamment le rapport G/Ro.

## Claims

**1.** Method of processing reflection seismic traces recorded as a function of time (t) for offsets (x) variable between a minimum offset and a maximum offset, wherein:

- gathers d(t,x) of normal moveout corrected (NMO corrected) common midpoint seismic traces are constituted in a first domain (t,x) from recorded seismic traces and a time dependent correction velocity law ($V_{NMO}$),
- a transform is applied to the d(t,x) gathers in said first domain so that there corresponds to each d(t,x) gather a $\mu(\tau,q)$ diagram in a second domain $\mu(\tau,q)$, so that a seismic event distributed along a curvilinear trajectory in the d(t,x) gather is focused in an energy concentration area in the $\mu(\tau,q)$ diagram in the second domain, the variation ($\tau$) designating the propagation time of the seismic waves with reflection for a null offset (x=0) and the variable q being a parameter associated with the curvature of said curvilinear trajectory, characterised in that, in each $\mu(\tau,q)$ diagram:

a) the coordinates ($\tau_k,q_k$) of an apparent centre of each energy concentration area are picked,
b) a window of which the width is less than the ($\tau,q$) domain and containing all of said energy concentration area is determined for each energy concentration area,
c) each energy concentration area is swept in the corresponding window centred at the point with coordinates ($\tau_k,q_k$) by a straight line segment that pivots successively about each of the points with coordinates ($\tau,q_k$) inside said window and the slope of which is equal to the square of the offset and varies between two limits bracketed by the squares of the minimum and maximum offsets,
d) the amplitudes of the signals in said window and intercepted by said straight line segment are stacked along said straight line segment, and in that:
e) the stacked values for each energy concentration area are represented in the form of a $D(\tau,x^2)$ diagram in a third domain ($\tau,x^2$).

2. Method according to claim I characterised in that the transform for going from a d(t,x) gather in the (t,x) domain to the corresponding $\mu(\tau,q)$ diagram in the ($\tau,q$) domain is a Radon parabolic transform.

3. Method according to claim 1 characterised in that the transform for going from a d(t,x) gather in the (t,x) domain to the corresponding $\mu(\tau,q)$ diagram in the ($\tau,q$) domain is a hyperbolic type Radon transform using a family of invariant hyperbolas by translation in time.

4. Method according to any one of claims 1 to 3 characterised in that the energy concentration area in the $\mu(\tau,q)$ diagram corresponds to stacked amplitudes constituting a sloping event in the $x^2$ direction on the $D(\tau,x^2)$ diagram transformed from the $\mu(\tau,q)$ diagram and in that the slope of the direction of said event, which is representative of the difference between the values of the parameter q associated with the picked apparent centre and the theoretical centre of said energy concentration area, is determined.

5. Method according to any one of claims 1 to 4 characterised in that the events represented on the $D(\tau,x^2)$ diagram are horizontalised and in that for each $\tau_i$ of the $D(\tau,x^2)$ diagram the amplitude of the corresponding signal of said diagram is analysed for the various values of $x^2$ in a time window of aperture $|\tau-\tau_i|<\Delta t$, where $\Delta t$ represents a predetermined value, and linear regression is applied to the amplitudes as a function of $x^2$ from which intercept (Ro) and gradient (G) parameters are deduced, produced on analysing variations of amplitude with the offset (AVO analysis) and usable to constitute sections representing, as a function of $\tau$, the parameter Ro (intercept section), the parameter G (gradient section) or combinations of these parameters, in particular the ratio G/Ro.

**Patentansprüche**

1. Verfahren zum Verarbeiten von seismischen Reflexionsspuren die als Funktion der Zeit t und eines variablen Offsets x aufgezeichnet zwischen einem minimalen und maximalen Offset registriert sind:

- in einem ersten (t,x)-Bereich wird eine Auswahl d(t,x) von seismischen Spuren mit gemeinsamen Mittelpunkt, die dynamisch und mit einem zeitabhängigen Geschwindigkeitsgesetz korrigiert sind, ausgewählt;

- die Auswahl d(t,x) des ersten Bereichs wird so transformiert, daß jeder Auswahl d(t,x) ein Diagramm $\mu(\tau,q)$ in einem zweiten ($\tau,q$)- Bereich entspricht, und, daß ein seismisches Ereignis, das eine gekrümmte Kurve in der Auswahl d(t,x) bildet, im $\mu(\tau,q)$ Diagramm des zweiten Bereichs in einer Zone konzentrierter Energie gebündelt ist; wobei

die Variable die Ausbreitungszeit der reflektierten seismischen Wellen mit Offset Null kennzeichnet; und die Variable q einen Parameter kennzeichnet, der mit der Krümmung der oben genannten gekrümmten Kurve zusammenhängt,

dadurch gekennzeichnet, dass
für jedes Diagramm $\mu$ ($\tau$,q)

a) die Koordinaten ($\tau$k,qk) eines Mittelpunkts jeder Zone konzentrierter Energie markiert werden;

b) für jede Zone mit Energiekonzentration im ($\tau$,q)-Bereich ein inneres Fenster bestimmt wird, das die gesamte Zone konzentrierter Energie umfaßt;

c) jede Zone konzentrierter Energie in dem jeweiligen Fenster, das im Punkt mit den Koordinaten $\tau$k, qk zentriert ist, mit einer Geraden überstrichen wird, die sukzessiv um jeden der Koordinatenpunkte $\tau$k, qk rotiert, die im Inneren des Fensters liegen, und deren Steigung gleich dem Quadrat des Offsets ist und zwischen zwei Grenzwerten variiert die durch die Quadrate des minimalen und des maximalen Offsets gegeben sind;

d) entlang der genannten Geraden die Amplituden der Signale summiert werden, die in dem Fenster enthalten sind und von der Geraden geschnitten werden; und

e) in einem dritten ($\tau$,$x^2$)-Bereich werden die Werte der Summen jeder Zone konzentrierter Energie als D($\tau$, $x^2$) -Diagramm dargestellt.

2. Verfahren nach Anspruch 1, dadurch gekennzeichnet, daß
die Transformation, die eine Auswahl d(t,x) des (t,x)-Bereichs in ein Diagramm $\mu$($\tau$,q) im ($\tau$,q)-Bereich überführt, eine parabolische RADON-Transformation ist.

3. Verfahren nach Anspruch 1, dadurch gekennzeichnet, daß
die Transformation, die eine Auswahl d(t,x) des (t,x)-Bereichs in ein Diagramm $\mu$ ($\tau$,q) im (T,q)-Bereich überführt, eine hyperbolische RADON-Transformation ist, wobei eine Hyperbel-Familie die invariant gegenüber einer Zeitverschiebung ist, verwendet wird.

4. Verfahren nach einem der Ansprüche 1 bis 3, dadurch gekennzeichnet, daß
die Zone konzentrierter Energie im $\mu$($\tau$,q)-Diagramm einer Summe von Amplituden entspricht, die ein Ereignis bilden mit einer Steigung in Richtung der $x^2$-Werte in dem aus dem $\mu$($\tau$,q)-Diagramm transformierten D($\tau$,$x^2$)-Diagramm, und, dass die Steigung der Richtung des genannten Ereignisses bestimmt wird, die repräsentativ ist für die Differenz der Werte des Parameters q, die dem scheinbaren markierten Mittelpunkt und dem theoretischen Mittelpunkt der Zone konzentrierter Energie entsprechen.

5. Verfahren nach einem der Ansprüche 1 bis 4, dadurch gekennzeichnet, dass die Ereignisse im D($\tau$,$x^2$)-Diagramm horizontiert werden, und dass für jedes $\tau$i im D($\tau$,$x^2$)-Diagramm eine Analyse der Amplitude des entsprechenden Signals das dem Diagramm entspricht durchgeführt wird für die verschiedenen $x^2$-Werte in einem Zeitfenster mit der Öffnung ($\tau$-$\tau$i)<$\Delta$t, wobei $\Delta$t ein vorgegebener Wert ist; und
es wird eine lineare Regression der Amplituden als Funktion von $x^2$ durchgeführt, und daraus der Intercept - Wert Ro und der Gradient G bestimmt, die Ergebnisse der Analyse der Variationen der Amplituden mit dem Offset sind, und geeignet sind, um Sektionen herzustellen, die den Wert Ro, den Wert G oder deren Kombinationen, besonders das Verhältnis G/Ro als Funktion von $\tau$ darstellen.

FIG.1

EP 0 797 780 B1

FIG.3

FIG.2

FIG_4

FIG_5

EP 0 797 780 B1

FIG_6

EP 0 797 780 B1